# EUROPÄISCHE PATENTSCHRIFT

(11) **EP 3 201 072 B1**
(45) Veröffentlichungstag und Bekanntmachung des Hinweises auf die Patenterteilung: **01.05.2019**
(21) Anmeldenummer: 15709658.7
(22) Anmeldetag: 05.03.2015
(51) Int. Cl.: B62D 65/00, B65G 47/74

(54) **WECHSELEINRICHTUNG FÜR SPANN- BZW. ZENTRIERBAUGRUPPEN**
REPLACEMENT DEVICE FOR CLAMPING AND/OR CENTERING SUBASSEMBLIES
DISPOSITIF DE PERMUTATION POUR MODULES DE SERRAGE OU DE CENTRAGE

(30) Priorität: 29.09.2014 AT 506912014
(43) Veröffentlichungstag der Anmeldung: 09.08.2017
(73) Patentinhaber: TMS Turnkey Manufacturing Solutions GmbH, 4031 Linz (AT)
(72) Erfinder: PUR, Miroslav, 77900 Olomouc (CZ)
(74) Vertreter: Patentanwälte Pinter & Weiss OG
(86) Internationale Anmeldenummer: PCT/EP2015/054563
(87) Internationale Veröffentlichungsnummer: WO 2016/050362

(56) Entgegenhaltungen:
- EP-A1- 2 489 463
- DE-A1- 3 625 218
- DE-A1-102008 011 032
- GB-A- 405 149
- GB-A- 546 080

## Beschreibung

Die vorliegende Erfindung betrifft eine Wechseleinrichtung mit einem Wechselkopf, welcher um eine Drehachse drehbar gelagert ist, mit zumindest zwei an unterschiedlichen Positionen vorgesehenen Werkzeugaufnahmen mit jeweils zumindest einem daran angeordneten Werkzeug und einer Drehvorrichtung, um eines der Werkzeuge in eine Arbeitsposition zu drehen.

In der Produktionstechnik kommen im Zuge von Kostenoptimierung und dem Bestreben vorhandene Ressourcen möglichst optimal zu nutzen, immer häufiger Produktions- und Fertigungseinrichtungen zur Anwendung, welche möglichst flexibel an unterschiedliche Aufgabenbereiche anpassbar sind.

Eine erhebliche Herausforderung besteht darin, unterschiedlichste Varianten bzw. Modelle eines Produkts unter Ausnutzung der vorhandenen produktionstechnischen Einrichtungen zu fertigen bzw. zu manipulieren. Ein erheblicher Zeit- und somit Kostenfaktor besteht darin, bestehende produktionstechnischen Einrichtungen beispielsweise infolge einer Modellumstellung umzurüsten, also Werkzeuge und/oder Handhabungsgeräte an ein geändertes Produkt anzupassen. Dabei ist zu beachten, dass jene Zeit, welche für dieses Umrüsten erforderlich ist, eine Totzeit darstellt, in welcher die Produktion, oder zumindest ein Produktionsbereich, keinen Output liefert. Weiters ist zu beachten, dass für die unterschiedlichen Werkzeuge und/oder Handhabungsgeräte eine entsprechende Lagerhaltung bzw. Verwaltung notwendig ist. In weiterer Folge muss dafür Sorge getragen werden, dass die richtigen Werkzeuge und/oder Handhabungsgeräte bei einer Modellumstellung an den richtigen Orten Verwendung finden.

Gerade im Karosseriebau der Automobilindustrie ist die Fertigung einer Vielzahl unterschiedlicher Modelle und Ausführungsvarianten auf ein und derselben produktionstechnischen Einrichtung, wie beispielsweise einem Förderer, wünschenswert und aus wirtschaftlichen Gründen auch notwendig. Dabei muss sichergestellt werden, dass unterschiedlichste Bauteile für die Bearbeitung richtig positioniert werden, unabhängig davon, um welche Ausführungsvariante eines Bauteils es sich gerade handelt.

Um unterschiedliche Fahrzeugtypen bzw. deren Bauteile in einer beliebigen Abfolge bearbeiten zu können zeigt die DE 20 201 103 051 U1 eine Hub-Drehvorrichtung, die es erlaubt unterschiedliche Werkzeuge und Werkstücke aufzunehmen und durch eine Hub-Drehbewegung entsprechend zu positionieren. Nachteilig ist dabei zu sehen, dass der Antrieb über ein klassisches Getriebe mit entsprechender Verzahnung erfolgt. Die genaue Positionierung etwaiger an der Hub-Drehvorrichtung befestigten Werkzeuge oder Bauteile, ist daher vom Zusammenspiel der Antriebsregelung und der Verzahnung des genutzten Getriebes abhängig. Um ein ungewolltes Verdrehen unter Last zu verhindern, wird die Selbsthemmung des Getriebes genutzt. Dabei muss selbstverständlich ein gewisses Verzahnungsspiel beachtet werden. Die Reproduzierbarkeit ist in Bezug auf die Positionierung daher eingeschränkt oder lediglich durch erhöhten Regelaufwand sichergestellt.

EP 2489463 A1 offenbart eine einzelne Lünette für Drehbänke, die auf einem Werkzeugrevolver angeordnet ist. Um auch die anderen auf dem Revolver angeordneten Werkzeuge verwenden zu können, können die Zangen der Lünette zur Drehachse hin zurückgezogen werden, sodass sie nicht im Weg sind, wenn der Werkzeugrevolver verdreht wird.

DE 10 2008 011032 A1 offenbart ebenfalls einen Werkzeugrevolver für eine Drehbank, auf dem mehrere Drehmeißel angeordnet sind. Der Werkzeugrevolver ist auf einem Werkzeughalterungskörper angeordnet. Der Werkzeughalterungskörper kann als Ganzes verdreht werden, um eine auf einer anderen Seite des Werkzeughalterungskörpers montierte Lünette in eine Arbeitsposition zu bringen.

DE 3625218 A1 offenbart einen zwischen einer Verriegelungs- und einer Verdrehstellung verschiebbaren Revolverkopf, auf dem auch zumindest eine Werkzeugstückhalte- oder Greifvorrichtung montiert ist.

GB 546080 A offenbart eine Drehbank mit manueller Verstellung. Auf einem mittels eines Handrads beweglichen Schlitten ist ein Drehturm angeordnet, dessen Rastpositionen von einem Motor über ein Maltesergetriebe eingestellt werden können.

GB 405149 A offenbart eine Revolverdrehbank mit mehreren Spindeln, wobei für die Werkzeugtrommel oder die Werksstückmontage über ein Maltesergewinde verstellbar ist.Die Aufgabe der vorliegenden Erfindung besteht daher darin, ein genaues und reproduzierbares Positionieren von Werkstücken unterschiedlicher Ausführung ohne erhöhten Regelaufwand zu ermöglichen.

Die Aufgabe wird erfindungsgemäß dadurch gelöst, dass die Werkzeuge durch Spann- und/oder Zentriereinrichtungen, gebildet sind, welche zur Aufnahme und/oder Zentrierung verschiedener Werkstücke unterschiedlich ausgeführt sind und dass die Drehvorrichtung ein Maltesergetriebe umfasst.

Die zumindest zwei, sich voneinander unterscheidenden Spann- und/oder Zentriereinrichtungen erlauben das Spannen und/oder Zentrieren zweier unterschiedlicher Werkstücke am Wechselkopf. Ein Maltesergetriebe ist dabei, in bekannter Weise aus einem Sternrad und einem Antriebsrad aufgebaut. Das Sternrad des Maltesergetriebes ermöglicht im Zusammenspiel mit dem zugehörigen Antriebsrad eine genaue, reproduzierbare Positionierung der Spann- und/oder Zentriereinrichtungen ohne entsprechende, hochauflösende Sensorik und eine damit verbundene genaue Lageregelung vorsehen zu müssen.

Vorteilhafterweise ist das Maltesergetriebe aus einem Sternrad mit zumindest vier Sternradschenkel und entsprechenden Sternradnuten und einem Antriebsrad mit einem Mitnehmerzapfen, welcher je nach Winkellage von Sternrad und Antriebsrad, mit den Sternradnuten zusammenwirkt, gebildet. Die vierschenkelige Variante stellt die einfachste und somit kostengünstigste Variante eines Sternrades dar, denoch können somit zumindest vier verschiedene Positionen durch den Wechselkopf eingenommen werden.

Weiters kann vorteilhaft vorgesehen sein, dass das Antriebsrad eine Sperrscheibe mit kreisförmigen Umfang und einer, zum Mitnehmerzapfen hin gerichteten Ausnehmung aufweist die Sternradschenkel an deren radial äußeren Umfang kreissegmentförmige Ausnehmungen aufweisen, welche je nach Winkellage von Sternrad und Antriebsrad mit dem kreisförmigen Umfang der Sperrscheibe in Eingriff sind.

Dies erlaubt, je nach Lage von Antriebsrad und Sternrad zueinander, eine Übertragung der Drehbewegung oder ein Sperren des Sternrades, um so den Wechselkopf in seiner Bewegungsfreiheit zu hemmen und eine Spann- und/oder Zentriereinrichtung sicher in Position zu halten.

Vorteilhaft kann vorgesehen sein, dass am Wechselkopf vier Werkzeugaufnahmen und daran jeweils zumindest eine Spann- und/oder Zentriereinrichtung zum Spannen und/oder Zentrieren verschiedener Werkstücke vorgesehen ist und dass die Spann- und/oder Zentriereinrichtungen um jeweils 90° versetzt am Wechselkopf angeordnet sind.

Ein Versatz der einzelnen Spann- und/oder Zentriereinrichtungen um jeweils 90° erlaubt bei kompakter Bauweise die Verwendung von vier unterschiedlichen Spann- und/oder Zentriereinrichtungen beziehungsweise das Spannen und/oder Zentrieren vier unterschiedlicher Werkstücke, wobei ein gegenseitiges behindern der einzelnen Spann- und/oder Zentriereinrichtungen noch vermieden wird.

Vorteilhaft kann weiters vorgesehen sein, dass zumindest vier Werkzeugaufnahmen vorgesehen sind, wobei an zumindest einer der Werkzeugaufnahmen ein Ausgleichsgewicht angeordnet ist.

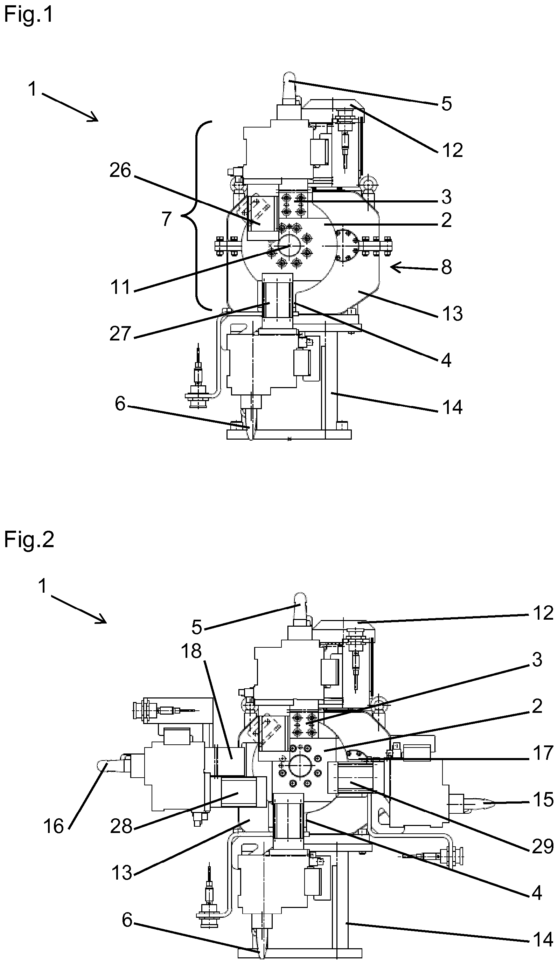

Wird somit eine oder auch mehrere Werkzeugaufnahmen des Wechselkopfes nicht mit einer Spann- und/oder Zentriereinrichtung besetzt, kann durch die Verwendung eines entsprechenden Ausgleichsgewichtes eine ausgewogene Gewichtsverteilung gewährleistet werden. Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Frontalansicht des erfindungsgemäßen Wechselkopfes,
Fig.2 eine Frontalansicht des erfindungsgemäßen Wechselkopfes in einer anderen Besetzungsvariante,
Fig.3 eine Frontalansicht des erfindungsgemäßen Wechselkopfes in einer weiteren Besetzungsvariante,
Fig.4 eine seitliche Ansicht des Wechselkopfes gemäß Ansicht IV in Fig.3,
Fig.5 eine prinzipielle Darstellung des genutzten Maltesergetriebes.

Fig.1 zeigt eine Frontalansicht der erfindungsgemäßen Wechseleinrichtung 1 mit dem Wechselkopf 2, welcher um eine Drehachse 11 drehbar gelagert ist. Wie erkennbar ist, handelt es sich um einen Wechselkopf 2 mit zumindest zwei Werkzeugaufnahmen 3, 4 zur Aufnahme von jeweils zumindest einem Werkzeug und mit einer Drehvorrichtung 7, welche ein in Fig.1 nicht näher dargestelltes Maltesergetriebe 8 umfasst, wobei die Werkzeuge durch Spann- und/oder Zentriereinrichtungen 5, 6 gebildet sind, welche zur Aufnahme und/oder Positionierung verschiedener Werkstücke unterschiedlich ausgeführt sind, und die Drehvorrichtung 7 vorgesehen ist, um eines der Werkzeuge in eine Arbeitsposition zu drehen.

Unter Spann- und/oder Zentriereinrichtungen 5, 6 sind dabei geeignete Vorrichtungen zu verstehen, welche es erlauben, entsprechende Werkstücke, beispielsweise Karosserieteile, zu positionieren bzw. deren Verharren in einer entsprechenden Position sicherzustellen. Als Zentriereinrichtungen 5, 6 werden dabei beispielsweise entsprechend dornförmige Zapfen oder Bolzen genutzt, welche ggf. mit am Werkstück vorgesehenen Zentrierbohrungen zusammenwirken können.

Als Spanneinrichtung 5, 6 können eine Vielzahl unterschiedlicher Klammern, Greifer, Haken und dergleichen genutzt werden, welche entweder separat oder in die Zentriereinrichtung 5, 6 integriert wirken können. Natürlich sind neben den erwähnten, formschlüssigen Spanneinrichtungen auch kraftschlüssige Verbindungen, wie beispielsweise pneumatische oder magnetische Systeme und auch Kombinationen denkbar. Zur Betätigung der Spannfunktion kann jede Spanneinrichtung 5, 6 über einen eigenen Antrieb 26, 27 verfügen, der das Betätigen ermöglicht.

Dadurch, dass sich die zumindest zwei Spann- und/oder Zentriereinrichtungen 5, 6 voneinander unterscheiden, können mithilfe des Wechselkopfs 2 zumindest zwei unterschiedliche Werkstücke gespannt bzw. zentriert werden. Durch die Verwendung einer Drehvorrichtung 7 mit einem Maltesergetriebe 8 bzw. dessen Sternrades 9 und dem zugehörigen Antriebsrades 10, wie nachfolgend und eingehend beschrieben, kann eine genaue, reproduzierbare Positionierung der Spann- und/oder Zentriereinrichtungen 5, 6 ermöglicht werden, ohne entsprechende, hochauflösende Sensorik und eine damit verbundene genaue Lageregelung vorsehen zu müssen.

Eine derartige Wechseleinrichtung 1 kommt vorzugsweise im Karosseriebau zur Anwendung. Dabei ist zu beachten, dass aufgrund der ständig wachsenden Modellpaletten der Hersteller dennoch ein möglichst universelles Einsetzen bestehender Fertigungsstraßen gewährleistet sein soll. Die Wechseleinrichtung 1 findet dabei beispielsweise beim Verschweißen einzelner Karosseriebauteile Anwendung. Dabei muss beachtet werden, dass beim Umstieg auf ein anderes Modell, bzw. auf eine andere Karosserie dennoch ein genaues Positionieren bzw. Fixieren der Karosserieteile sichergestellt werden muss. Nur dann ist ein sachgemäßes Fügen, beispielsweise durch Nutzung eines Schweißroboters, möglich.

Beim Umstieg auf ein anderes Modell bzw. ein anderes Werkstück, wird der Wechselkopf 2 der Wechseleinrichtung 1 daher durch eine Antriebseinheit 12 über die Drehvorrichtung 7 in Rotation versetzt und führt eine Drehbewegung um die Drehachse 11 aus. Dadurch wird die, zum jeweiligen Modell/Werkstück passende, Spann- und/oder Zentriereinrichtung 5 oder 6 in eine entsprechende Arbeitsposition bewegt.

In Figur 1 sei beispielsweise jene Position in welcher die Spann- und/oder Zentriereinrichtung 5 dargestellt ist eine Arbeitsposition. Die dargestellten Positionen der Spann- und/oder Zentriereinrichtungen 5, 6 sind selbstverständlich beispielhaft zu sehen. Diese Positionen bzw. eine Arbeitsposition ist grundsätzlich von den zu spannenden und/oder zentrierenden Modellen/Werkstücken und möglicherweise weiteren, in der Umgebung angeordneten Einrichtungen abhängig. Eine Arbeitsposition kann daher auch an einer anderen Stelle vorgesehen sein oder auch variieren.

Im Zuge des Modellwechsels kommt somit die jeweils passende Spann und/oder Zentriervorrichtung 5 oder 6 zur Anwendung und erlaubt es wiederum das entsprechende Werkstück für die Weiterbearbeitung sicher zu positionieren bzw. zu fixieren.

Natürlich ist auch die genannte Anwendung für den Karosseriebau beispielhaft, und nicht einschränkend. Grundsätzlich kann die beschriebene Wechseleinrichtung 1 bei den unterschiedlichsten produktionstechnischen Anwendungen, in Zusammenhang mit Spann- und/oder Zentrieraufgaben entsprechend zur Anwendung kommen.

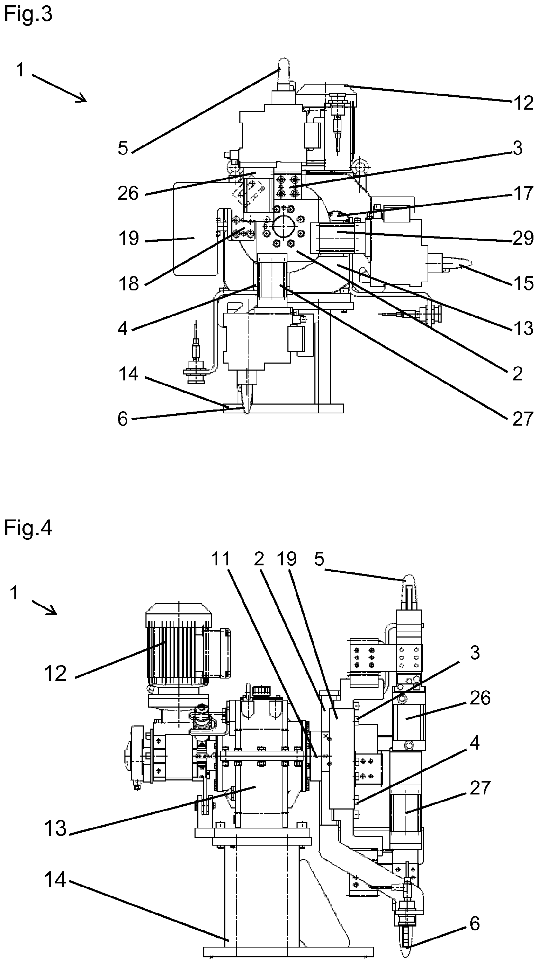

Wie in Figur 1 und insbesondere in Figur 4 gut erkennbar ist, ist das Maltesergetriebe 8 in einem, lediglich beispielhaft dargestellten, Gehäuse 13 geschützt angeordnet. Auch ein zum Gehäuse 13 ggf. zugehöriger Unterbau 14 ist lediglich schematisch und beispielhaft dargestellt. Je nach Verwendung und Anordnung des Wechselkopfes 2 kann die Antriebseinheit 12, das Gehäuse 13 und der Unterbau 14 entsprechend anders ausgeformt bzw. gestaltet sein. Beispielsweise ist das Gehäuse 13 als Guss-Teil dargestellt, wobei genauso gut eine Schweißkonstruktion Anwendung finden kann.

Ebenfalls lediglich beispielhaft in Figur 1 dargestellt, sind die beiden Spann- und/oder Zentriereinrichtungen 5, 6 am Wechselkopf 1 um 180° zueinander versetzt angeordnet. Für die Anordnung der verschiedenen Spann- und/oder Zentriereinrichtungen 5, 6 ist selbstverständlich eine derartige Anordnung vorteilhaft wenn, wie in Figur 1 dargestellt, lediglich zwei Spann- und/oder Zentriereinrichtungen 5, 6 zur Anwendung kommen, da dies eine möglichst ausgeglichene Gewichtsverteilung erlaubt.

Sind beispielsweise, wie in Figur 2 dargestellt, am Wechselkopf 2 vier Werkzeugaufnahmen 3, 4, 17, 18 und daran jeweils zumindest eine Spann- und/oder Zentriereinrichtung 5, 6, 15, 16 zum Spannen und/oder Zentrieren verschiedener Werkstücke vorgesehen, können die Spann- und/oder Zentriereinrichtungen 5, 6, 15, 16 um jeweils 90° versetzt am Wechselkopf 2 angeordnet sein. Wie bereits erwähnt verfügen die einzelnen Spann- und/oder Zentriereinrichtungen 5, 6, 15, 16 über jeweils eigene Antriebe 26, 27, 28, 29 zu deren Betätigung.

Zum einen wird dadurch eine verhältnismäßig kompakte Bauweise realisiert, wobei dennoch vier unterschiedliche Werkstücke gespannt und/oder zentriert werden können. Zum anderen erlaubt eine derartige Anordnung eine entsprechend ausgeglichene Gewichtsverteilung. Dadurch wird eine unregelmäßige Belastung etwaiger Lagerstellen vermieden und eine entsprechend hohe Lebensdauer gewährleistet.

Ob sich die einzelnen Werkzeugaufnahmen 3, 4, 17, 18, an welchen die Spann- und/oder Zentriereinrichtungen 5, 6, 15, 16 befestigt werden, an einer Stirnfläche oder der Umfangsfläche des Wechselkopfs 2 befinden, ist für die Funktion nicht von Relevanz. Je nach Anwendungsgebiet und Platzverhältnissen können die Werkzeugaufnahmen 3, 4, 17, 18 an geeigneterer Stelle vorgesehen sein. Lediglich beispielhaft sind daher die Werkzeugaufnahmen 3, 4, 17, 18 in den Figuren 1 bis 4 an der, dem Gehäuse 13 abgewandten Stirnseite des Wechselkopfs 2 angeordnet.

Die Figuren 3 und 4 zeigen eine Wechseleinrichtung 1 bzw. einen Wechselkopf 2 bei welchem zwar vier, um jeweils 90° zueinander versetzte Werkzeugaufnahmen 3, 4, 17, 18, vorgesehen sind, jedoch lediglich drei davon mit entsprechenden Spann- und/oder Zentriereinrichtungen 5, 6, 15 versehen sind.

Vorteilhaft ist in diesem Fall vorgesehen, dass anstelle einer "fehlenden" Spann- und/oder Zentriereinrichtung 5, 6, 15, 16 ein Ausgleichsgewicht 19 an der jeweiligen Werkzeugaufnahme 3, 4, 17, 18 des Wechselkopfs 2 angeordnet ist.

Wird somit eine oder auch mehrere Werkzeugaufnahmen 3, 4, 17, 18, des Wechselkopfes 2 nicht mit einer Spann- und/oder Zentriereinrichtung 5, 6, 15, 16 besetzt, kann durch die Verwendung eines entsprechenden Ausgleichsgewichtes 19 eine ausgewogene Gewichtsverteilung gewährleistet werden. Dadurch ergeben sich wesentlich verbesserte Kraftverhältnisse für die einzelnen Getriebekomponenten.

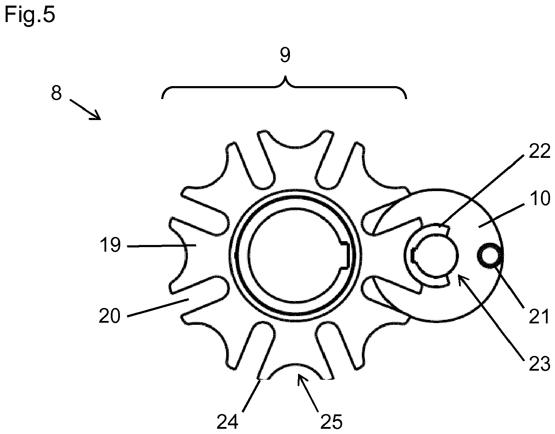

In Figur 5 ist ein verwendetes Maltesergetriebe 8 beispielhaft dargestellt. Es besteht bekanntermaßen, und wie bereits ausgeführt, aus einem Sternrad 9 und einer zugehörigen Antriebsrad 10. Sternrad 9 und Antriebsrad 10 liegen dabei nicht in der gleichen Ebene, wobei sich die einander zugewanten Stirnseiten von Sternrad 9 und Antriebsrad 10 zumindest teilweise überlappen. Das Sternrad 9 ist drehfest mit dem Wechselkopf 2 verbunden, das Antriebsrad 10 mit der Antriebseinheit 12. Die Verbindung der Antriebseinheit 12 mit dem Antriebsrad 10 des Maltesergetriebes 8 kann dabei direkt oder auch über ein nicht weiter dargestelltes Zwischengetriebe in geeigneter Form erfolgen.

Die einzelnen Sternradschenkel 19 des Sternrades 9 sind durch Sternradnuten 20 voneinander getrennt. Am Umfang des Antriebsrades 10 befindet sich, exzentrisch angeordnet, an der dem Sternrad 9 zugewandten Stirnseite zumindest ein Mitnehmerzapfen 21, welcher bei rotierendem Antriebsrad 10 mit einer nahegelegenen Sternradnut 20 im Sternrad 9 in Eingriff tritt. Infolge dieses Eingriffs wird das Sternrad 9 in Drehbewegung versetzt, jedoch nur solange, wie der Eingriff des Mitnehmerzapfens 21 des Antriebsrades 10 gewährleistet ist. Je nach den geometrischen Verhältnissen zwischen Sternrad 9 und Antriebsrad 10 bzw. deren Lage zueinander, tritt der Mitnehmerzapfen 21 beim Weiterdrehen des Antriebsrades 10 wieder aus dem Eingriff mit der Sternradnut 20 des Sternrades 9 aus, wodurch die Rotation des Sternrades 9 nicht vorgesetzt wird. Durch diese Bau- und Funktionsweise, welche grundsätzlich hinlänglich bekannt ist, wird aus einer kontinuierlichen Drehbewegung des Antriebsrades 10 eine intermittierende Drehbewegung des Sternrades 9 bzw. des damit verbundebnen Wechselkopfes 1.

Dadurch, dass das Maltesergetriebe 8 aus einem Sternrad 9 mit zumindest vier Sternradschenkel 19 und entsprechenden Sternradnuten 20 und einem Antriebsrad 10 mit einem Mitnehmerzapfen 21, welcher je nach Winkellage von Sternrad 9 und Antriebsrad 10 mit den Sternradnuten 20 zusammenwirkt, gebildet wird, ist bereits bei der Minimalvariante eines Maltesergetriebes 8 das Einnehmen von zumindest vier Positionen ermöglicht. Es ist offensichtlich, dass die Anzahl der Sternradschenkel 19 bzw. Der Sternradnuten 20 der maximalen Anzahl der möglichen Positionen für die Werkzeugaufnahmen 3, 4, 17, 18 bzw. der daran aufgenommenen Spann- und/oder Zentriereinrichtungen 5, 6, 15, 16 entspricht.

Je nach den vorhandenen Platzverhältnissen oder auch Anforderungen an die Vielseitigkeit einer Produktionsanlage in welcher die erfindungsgemäße Wechseleinrichtung 1 Anwendung findet, können selbstverständlich auch mehr als vier Spann- und/oder Zentriereinrichtung 3, 5, 13, 15 vorgesehen sein. Dabei ist zu beachten, dass, wie eben erwähnt, die Ausführung des Maltesergetriebes 8, insbesondere die Anzahl der Sternradschenkel 19 bzw. Sternradnuten 20, welche das verwendete Sternrad 9 aufweist, vorzugsweise mit der Anzahl der möglichen Positionen korrespondiert.

Beispielsweise ermöglicht ein Maltesergetriebe 8, wie es in Figur 5 dargestellt ist, grundsätzlich bis zu acht Positionen des Wechselkopfs 2. Findet ein Maltesergetriebe 8 mit einem Sternrad 9 in dieser Ausführung für eine Besetzung des Wechselkopfs wie er in Figur 2 dargestellt ist Anwendung, sind somit zwei Umdrehungen des Antriebsrades 10 notwendig, um eine benachbarte Spann- und/oder Zentriereinrichtungen 5, 6, 15, 16 in ihre Arbeitsposition zu verdrehen. Je nach gewählten Sternrad 9 und Anzahl der Spann- und/oder Zentriereinrichtungen 5, 6, 15, 16 ergibt sich somit eine gewisse Untersetzung in Hinblick auf die Rotationen des Antriebsrades 10 und dem Sternrad 9 bzw. dem daran angeordneten Wechselkopf 2.

Natürlich könnte ein Wechselkopf 2 in Verbindung mit einem derartigen Maltesergetriebe 8 wie es in Figur 5 gezeigt ist auch mehr als vier Werkzeugaufnahmen 3, 4, 17, 18 aufweisen oder entsprechend andere Winkel als 90° zwischen einzelnen Werkzeugaufnahmen 3, 4, 17, 18 realisiert werden. Je nach Anwendungsgebiet kann daher in Zusammenhang mit dem entsprechenden Sternrad 9 eine geeignete Auswahl getroffen werden. Ein entsprechender Gewichtsausgleich ist in vorteilhafter Weise aus den bereits genannten Gründen vorzusehen.

Wie in Figur 5 weiters erkennbar ist weist das Antriebsrad 10 eine damit drehfest verbundene Sperrscheibe 22 mit kreisförmigen Umfang und einer, zum Mitnehmerzapfen 21 hin gerichteten Ausnehmung 23 auf, wobei die Sternradschenkel 19 an deren radial äußeren Umfang 24 kreissegmentförmige Ausnehmungen 25 aufweisen, welche je nach Winkellage von Sternrad 9 und Antriebsrad 10 mit dem kreisförmigen Umfang der Sperrscheibe 22 in Eingriff sind.

Die Ausnehmung 23 ermöglicht, aufgrund ihrer Ausrichtung, ein kollisionsfreies Rotieren des Antriebsrades 10, solange der Mitnehmerzapfen 21 mit einer Sternradnut 20 in Eingriff steht. Sobald der Mitnehmerzapfen 21 nicht mehr in eine Sternradnut 20 eingreift kommt die entsprechende kreissegmentförmige Ausnehmung 25 am radial äußeren Umfang 24 eines Sternradschenkels 19 mit dem kreisförmigen Umfang der Sperrscheibe 22 in Kontakt. Dadurch ergibt sich eine gewisse formschlüssige Sperrwirkung und eine Verdrehung des Sternrades 9 wird gehemmt. Es ergibt sich zwangsläufig eine Fixierung der Position welche der Wechselkopf 2 momentan angenommen hat. Eine daran befestigte Spann- und/oder Zentriereinrichtung 3, 5, 13, 15 verharrt aufgrund dieses Formschlusses sicher in der eingenommenen Position.

Dadurch wird ein genaues und reproduzierbares Positionieren von Werkstücken unterschiedlicher Ausführung ohne erhöhtem Regelaufwand ermöglicht.

## Patentansprüche

1. Wechseleinrichtung (1) mit einem Wechselkopf (2), welcher um eine Drehachse (11) drehbar gelagert ist, mit zumindest zwei an unterschiedlichen Positionen vorgesehenen Werkzeugaufnahmen (3, 4, 17, 18) mit jeweils zumindest einem daran angeordneten Werkzeug und einer Drehvorrichtung (7) um eines der Werkzeuge in eine Arbeitsposition zu drehen, **dadurch gekennzeichnet, dass** die Werkzeuge durch Spann- und/oder Zentriereinrichtungen (5, 6, 15, 16) gebildet sind, welche zur Aufnahme und/oder Zentrierung verschiedener Werkstücke unterschiedlich ausgeführt sind **und dass** die Drehvorrichtung (7) ein Maltesergetriebe (8) umfasst.

2. Wechseleinrichtung (1) nach Anspruch 1, **dadurch gekennzeichnet, dass** das Maltesergetriebe (8) aus einem Sternrad (9) mit zumindest vier Sternradschenkel (19) und entsprechenden Sternradnuten und einem Antriebsrad (10) mit einem Mitnehmerzapfen (21), welcher je nach Winkellage von Sternrad (9) und Antriebsrad (10) mit den Sternradnuten (20) zusammenwirkt, gebildet wird.

3. Wechseleinrichtung (1) nach Anspruch 2, **dadurch gekennzeichnet, dass** das Antriebsrad (10) eine Sperrscheibe (22) mit kreisförmigen Umfang und einer, zum Mitnehmerzapfen (21) hin gerichteten Ausnehmung (23) aufweist **und dass** die Sternradschenkel (19) an deren radial äußeren Umfang (24) kreissegmentförmige Ausnehmungen (25) aufweisen, welche je nach Winkellage von Sternrad (9) und Antriebsrad (10) mit dem kreisförmigen Umfang der Sperrscheibe (22) in Eingriff sind.

4. Wechseleinrichtung (1) nach einem der Ansprüche 1 bis 3, **dadurch gekennzeichnet, dass** am Wechselkopf (2) vier Werkzeugaufnahmen (3, 4, 17, 18) und daran jeweils zumindest eine Spann- und/oder Zentriereinrichtung (5, 6, 15, 16) zum Spannen und/oder Zentrieren verschiedener Werkstücke vorgesehen ist und dass die Spann- und/oder Zentriereinrichtungen (5, 6, 15, 16) um jeweils 90° versetzt am Wechselkopf (2) angeordnet sind.

5. Wechseleinrichtung (1) nach einem der Ansprüche 1 bis 3, **dadurch gekennzeichnet, dass** am Wechselkopf (2) zumindest vier Werkzeugaufnahmen (3, 4, 17, 18) vorgesehen sind, wobei an zumindest einer der Werkzeugaufnahmen (2, 4, 14, 16)ein Ausgleichsgewicht (19) angeordnet ist.

## Claims

1. A changing device (1) having a changing head (2), which is mounted so it is rotatable about an axis of rotation (11), having at least two tool receptacles (3, 4, 17, 18), which are provided at different positions, having at least one tool arranged thereon in each case, and a rotating device (7) to rotate one of the tools into an operating position, **characterized in that** the tools are formed by clamping and/or centering devices (5, 6, 15, 16), which are embodied differently to accommodate and/or center various tools, **and that** the rotating device (7) comprises a Geneva drive (8).

2. The changing device (1) as claimed in claim 1, **characterized in that** the Geneva drive (8) is formed from a star wheel (9) having at least four star wheel legs (19) and corresponding star wheel grooves and a drive wheel (10) having a driver pin (21), which interacts with the star wheel grooves (20) depending on the angular position of star wheel (9) and drive wheel (10).

3. The changing device (1) as claimed in claim 2, **characterized in that** the drive wheel (10) has a locking washer (22) having circular circumference and a recess (23) oriented toward the driver pin (21), **and that** the star wheel legs (19) have recesses (25) in the form of circular segments on the radial outer circumference (24) thereof, which are engaged with the circular circumference of the locking washer (22) depending on the angular position of star wheel (9) and drive wheel (10).

4. The changing device (1) as claimed in any one of claims 1 to 3, **characterized in that** four tool receptacles (3, 4, 17, 18) and at least one clamping and/or centering device (5, 6, 15, 16) on each thereof for clamping and/or centering various workpieces are provided on the changing head (2), **and that** the clamping and/or centering devices (5, 6, 15, 16) are each arranged offset by 90° on the changing head (2).

5. The changing device (1) as claimed in any one of claims 1 to 3, **characterized in that** at least four tool receptacles (3, 4, 17, 18) are provided on the changing head (2), wherein a balancing weight (19) is arranged on at least one tool receptacle (2, 4, 14, 16).

## Revendications

1. Dispositif de remplacement (1) comprenant une tête de remplacement (2) qui est montée à rotation sur un axe de rotation (11), au moins deux logements d'outils (3, 4, 17, 18) prévus à des positions différentes et comportant chacun au moins un outil disposé au niveau de chacun d'eux et un dispositif de rotation (7) destiné à faire tourner l'un des outils jusque dans une position de travail, **caractérisé en ce que** les outils sont formés par des dispositifs de serrage et/ou de centrage (5, 6, 15, 16) conçus différemment pour recevoir et/ou centrer différentes pièces et **en ce que** le dispositif de rotation (7) comprend une transmission à croix de Malte (8).

2. Dispositif de remplacement (1) selon la revendication 1, **caractérisé en ce que** la transmission à croix de malte (8) est formée d'une roue en étoile (9), comportant au moins quatre branches de roue en étoile (19) et des gorges de roue en étoile correspondantes, et d'une roue d'entraînement (10) comportant un axe d'entraînement (21) qui coopère avec les gorges de roue en étoile (20) en fonction de la position angulaire de la roue en étoile (9) et de la roue d'entraînement (10).

3. Dispositif de remplacement (1) selon la revendication 2, **caractérisé en ce que** la roue d'entraînement (10) comporte un disque de blocage (22) à périphérie circulaire et un évidement (23) orienté en direction de l'axe d'entraînement (21) et **en ce que** les branches de roue en étoile (19) comportent, au niveau de leur circonférence radialement extérieure (24), des évidements (25) en forme de segments circulaires qui sont en engagement avec la périphérie circulaire du disque de blocage (22) en fonction de la position angulaire de la roue en étoile (9) et de la roue d'entraînement (10).

4. Dispositif de remplacement (1) selon l'une des revendications 1 à 3, **caractérisé en ce que** la tête de remplacement (2) comporte quatre logements d'outils (3, 4, 17, 18) et, au niveau de chacun d'eux, au moins un dispositif de serrage et/ou de centrage (5, 6, 15, 16) destiné à serrer et/ou centrer différents pièces et **en ce que** les dispositifs de serrage et/ou de centrage (5, 6, 15, 16) sont disposés au niveau de la tête de remplacement (2) en étant décalés de 90°.

5. Dispositif de remplacement (1) selon l'une des revendications 1 à 3, **caractérisé en ce que** la tête de remplacement (2) comporte au moins quatre logements d'outils (3, 4, 17, 18), un poids de compensation (19) étant disposé au niveau d'au moins l'un des logements d'outil (2, 4, 14, 16).
